# EUROPÄISCHE PATENTSCHRIFT

(11) **EP 4 454 849 B1**
(45) Veröffentlichungstag und Bekanntmachung des Hinweises auf die Patenterteilung: **01.07.2026**
(21) Anmeldenummer: 24171801.4
(22) Anmeldetag: 23.04.2024
(51) Int. Cl.: B29B 17/00, B29B 17/04, C08J 5/04

(54) **HERSTELLUNGSVERFAHREN FÜR EIN DUROPLASTISCHES FASERVERBUNDHALBZEUG**
PRODUCTION PROCESS FOR A THERMOSETTING FIBER COMPOSITE SEMI-FINISHED PRODUCT
PROCÉDÉ DE FABRICATION D'UN SEMI-PRODUIT COMPOSITE THERMODURCISSABLE À BASE DE FIBRES

(30) Priorität: 24.04.2023 DE 102023110406
(43) Veröffentlichungstag der Anmeldung: 30.10.2024
(60) Teilanmeldung: 25181103.0
(73) Patentinhaber: POLYTEC PLASTICS Germany GmbH & Co. KG, 49393 Lohne (DE)
(72) Erfinder: Rocha, Julian, 76703 Kraichtal-Gochsheim (DE); Nuber, Sebastian, 76703 Kraichtal-Gochsheim (DE); Wetzel, Andreas, 76703 Kraichtal-Gochsheim (DE)
(74) Vertreter: dompatent

(56) Entgegenhaltungen:
- EP-A1- 0 443 051
- EP-A1- 0 566 830
- DE-A1- 102007 058 893
- DE-A1- 102010 007 004
- DE-A1- 102010 046 685
- DE-A1- 102018 103 702
- US-A- 5 185 380
- US-A1- 2017 362 406
- US-A1- 2021 260 793
- PANNKOKE KORD ET AL: "Efficient prepreg recycling at low temperatures", CRYOGENICS., vol. 38, no. 1, 1 January 1998 (1998-01-01), GB, pages 155 - 159, XP093188488, ISSN: 0011-2275, DOI: 10.1016/S0011-2275(97)00127-6
- PICKERING ET AL: "Recycling technologies for thermoset composite materials-current status", COMPOSITES PART A, ELSEVIER, AMSTERDAM, NL, vol. 37, no. 8, 1 August 2006 (2006-08-01), pages 1206 - 1215, XP005477761, ISSN: 1359-835X, DOI: 10.1016/J.COMPOSITESA.2005.05.030
- DATABASE COMPENDEX [online] ENGINEERING INFORMATION, INC., NEW YORK, NY, US; 2014, PERTUISEL J ET AL: "Recycling of thermoset polymer composites: A working example", XP002812710, Database accession no. E20151500721693
- PERTUISEL J ET AL: "Recycling of thermoset polymer composites: A working example", CAMX 2014 - COMPOSITES AND ADVANCED MATERIALS EXPO: COMBINED STRENGTH. UNSURPASSED INNOVATION. 2014 THE COMPOSITES AND ADVANCED MATERIALS EXPO (CAMX) USA, 2014
- QURESHI JAWED: "A Review of Recycling Methods for Fibre Reinforced Polymer Composites", SUSTAINABILITY, vol. 14, no. 24, 15 December 2022 (2022-12-15), pages 16855, XP093027289, DOI: 10.3390/su142416855

## Beschreibung

Die vorliegende Erfindung betrifft ein Herstellungsverfahren für ein duroplastisches Faserverbundhalbzeug.

Aus dem Stand der Technik sind bereits Vorrichtungen und Verfahren zur Gewinnung von Füllstoffen aus Rezyklatbestandteilen bzw. aus wiederverwendeten Duroplasten bzw. duroplastischen Faserverbundbauteilen bekannt geworden. Nachteilig an den Verfahren und Vorrichtungen aus dem Stand der Technik ist, dass diese kein einheitliches und somit homogenes Rezyklat mit einem durchschnittlichen Partikeldurchmesser im Bereich kleiner als 100 µm erzeugen können und es somit in der praktischen Anwendung des Rezyklats in der Herstellung von duroplastischen Kunststoffen, wie insbesondere der Herstellung von duroplastischen Faserverbundwerkstoffen, zu Ausfällen im Herstellungsprozess kommt. Diese Ausfälle können Folienrisse aufgrund von scharfkantigen Partikeln im Sheet Molding Compound (SMC) Herstellungsprozess oder Fehlstellen in den hergestellten Formteilen sein, welche zu einer Minderung der mechanischen Eigenschaften führen (Kerbminderungseffekt). Außerdem ist es aufgrund der inhomogenen Rezyklatpartikel gemäß Stand der Technik nicht möglich, Formteile im Class A-Bereich herzustellen. Aufgrund dieser Nachteile konnte die Kreislaufwirtschaft im Bereich der duroplastischen Kunststoffe bisher nicht implementiert werden.

Aus EP 0 443 051 A1 ist ein Verfahren zur Herstellung einer duroplastischen Pressmasse aus einem Glasfaser-Polyester-Verbundwerkstoff, insbesondere SMC, BMC oder DMC, bekannt geworden. Abfallteile aus gepresstem SMC, BMC oder DMC werden in einem Zerkleinerer zerkleinert, wobei die Glasfaser-Polyester-Verbundstruktur mechanisch aufgebrochen wird. Die so gewonnenen Glasfasern werden in einem Schwingsieb von der pulverförmigen Recyclingfraktion getrennt und einer gezielten Oberflächenbehandlung unterzogen. Der pulverförmigen Recyclingfraktion werden Netzmittel zugesetzt. Bei der Herstellung der neuen duroplastischen Formmasse wird die gewonnene pulverförmige Recyclingfraktion als Recyclingfüllstoff in die Harzpaste eingearbeitet. Die recycelten Glasfasern ersetzen weitgehend die sonst benötigten Originalglasfasern.

Ausgehend von den vorbezeichneten Nachteilen des Standes der Technik stellt sich die vorliegende Erfindung die Aufgabe, ein verbessertes Herstellungsverfahren für ein duroplastisches Faserverbundhalbzeug bereitzustellen, wobei das verwendete Rezyklatpulver bevorzugt über Verfahren zur Gewinnung von Rezyklat aus duroplastischen Ausgangswerkstoffen, wie insbesondere aus duroplastischen Faserverbundwerkstoffen, gewonnen wird, welches als Substitutionsbestandteil für einen mineralischen Füllstoff im Rahmen der Neuherstellung eines duroplastischen Kunststoffes oder insbesondere eines Faserverbundhalbwerkzeugs mit duroplastischer oder thermoplastischer Matrix, genutzt werden kann, welches bevorzugt wiederum als Class A-Bauteil Verwendung finden kann.

Gemäß einem ersten Aspekt betrifft die vorliegende Erfindung ein Herstellungsverfahren für ein duroplastisches Faserverbundhalbzeug umfassend die Verfahrensschritte:
A) Bereitstellen der Rezepturbestandteile zur Herstellung eines duroplastischen Matrixwerkstoffs für Faserverbundhalbzeuge umfassend ein Füllstoffgemisch und einen duroplastischen Reaktionsharz, wobei das Füllstoffgemisch zumindest Rezyklatpulver aus rezyklierten duroplastischen Ausgangswerkstoffen, wie insbesondere Faserverbundwerkstoffen, umfasst, in einem Gewichtsverhältnis von 1 % bis 40 % des Gesamtgewichts des Füllstoffgemischs;
B) Fördern der Rezepturbestandteile aus Schritt A) umfassend das Füllstoffgemisch und das Reaktionsharz mit Hilfe mindestens einer Dosiereinrichtung in einen Dissolver;
C) Vermischen der Rezepturbestandteile unter Verwendung einer Dissolverscheibe und/oder einer Doppelsogzahnscheibe im Dissolverprozess zum Erhalt eines homogenen Harz-Füllstoffgemischs umfassend das Rezyklatpulver;
D) Aufrakeln des Harz-Füllstoffgemisches aus Schritt C) auf einer co-extrudierten Schleppfolie, wobei die Zugabe des Harz-Füllstoff-Gemisches auf die Schleppfolie über einen Rakelkasten erfolgt;
E) Beaufschlagen des auf die Schleppfolie aufgerakelten Harz-Füllstoffgemischs mit Schnittfasern, Fasergeweben, Fasergelegen aus Glasfaser oder alternativen Fasertypen wie Kohlenstofffasern oder Naturfasern zum Erhalt eines Faser-Harz-Füllstoffhalbzeugs; und
F) Walken des Faser-Harz-Füllstoffhalbzeuges zum Erhalt eines Halbzeugs, wobei die Fasern mit dem Reaktionsharz und dem Rezyklatpulver gleichmäßig umschlossen sind.

Durch die Rezyklatzugabe kann eine Erhöhung der mechanischen Eigenschaften der Matrix erreicht werden. Hierdurch ist wiederum eine Erhöhung der mechanischen Eigenschaften der hergestellten Faserverbundformteile möglich, im Zuge dessen eine Zugabe an Glasfasern reduziert werden kann.

Das Füllstoffgemisch im Verfahrensschritt A) kann zusätzlich zu dem Rezyklatpulver unter anderem folgende sonstige Rezepturbestandteile enthalten: ungesättigte Polyester-(UP)- Harze, Vinylester-(VE)- Harze, ungesättigte Hybridharze, Styrol, Vinyltoloul, Thermoplastlösungen, Calciumcarbonat als Füllstoff, sowie Peroxide, Inhibitoren, Netz- und Dispergieradditive und Pigmente.

Bevorzugt kann das Rezyklatpulver aus rezyklierten duroplastischen Ausgangswerkstoffen, wie insbesondere Faserverbundwerkstoffen, mittels eines Verfahrens gewonnen werden umfassen die Verfahrensschritte:
A) Bereitstellen zu rezyklierender duroplastischer Ausgangswerkstoffe;
B) Brechen der duroplastischen Ausgangswerkstoffe aus Verfahrensschritt A) mit einem Zweiwellen-Zerkleinerer zum Erhalt einer Vielzahl von Bruchstükken;
C) Zerkleinern der Bruchstücke aus Verfahrensschritt B) mit einem Einwellen-Zerkleinerer zum Erhalt einer Vielzahl von Flocken; und
D) Feinmahlen der Flocken aus Verfahrensschritt C) mit einer Mahleinrichtung zum Erhalt eines Rezyklatpulvers.

Besonders bevorzugt kann vorgesehen werden, dass im Verfahrensschritt A) als zu rezyklierender duroplastischer Ausgangswerkstoff duroplastische Faserverbundbauteile bereitgestellt werden.

Bei den Faserverbundteilen kann es sich insbesondere um Faserverbundformteile handeln. Die Faserverbundbauteile umfassen bevorzugt Glasfasern, welche in einem ausgehärteten duroplastischen Matrixwerkstoff eingebettet vorliegen. Die Quellen der zu rezyklierenden duroplastischen Faserverbundbauteile können aus unterschiedlichen Bereichen stammen, beispielsweise können SMC-Formteile aus dem Boot- und Schiffsbau, Rotorblätter von Windkraftanlagen oder weitere Faserverbundformteile als Ausgangsstoff dienen, welche nunmehr einer Rezyklierung bzw. einem Recycling zugeführt werden sollen.

Im Rahmen der vorliegenden Erfindung sollen unter dem Begriff der zu rezyklierenden Ausgangswerkstoffe somit jegliche Werkstoffe, Werkstoffgemische bzw. auch Bauteile verstanden werden, welche zumindest einen duroplastischen Kunststoff und bevorzugt Verstärkungsfasern, wie besonders bevorzugt Glasfasern, umfassen, welche in einen duroplastischen Kunststoff eingebettet vorliegen. Bei den zu rezyklierenden Ausgangswerkstoffen handelt es sich beispielsweise um Abfallprodukte, welche während einer Neuteilproduktion beispielsweise von Faserverbundbauteilen als Überschussabschnitte etc. anfallen. Allerdings können im Rahmen des vorliegenden Verfahrens auch alte Faserverbundbauteile oder duroplastische Bauteile genutzt werden, welche durch Alterung oder Zerstörung nicht mehr für die intendierte Funktion genutzt werden können und folglich eigentlich entsorgt werden müssten und nunmehr nachhaltig in dem erfindungsgemäßen Verfahren zur Rezyklatgewinnung zu einem Ausgangswerkstoff für die Herstellung von neuen duroplastischen Bauteilen genutzt werden können.

Der Begriff der Flocken soll im Rahmen der vorliegenden Erfindung synonym für den englischsprachigen Begriff der "Flakes" verwendet werden. Bei den Flocken bzw. Flakes kann es sich um einen kleinen dünnen Gegenstand handeln, welcher spröde vorliegen kann, aber auch eine gewisse Duktilität aufweisen kann.

Es kann vorgesehen werden, dass die duroplastischen Ausgangswerkstoffe, wie insbesondere die Faserverbundformteile im Verfahrensschritt B), auf Bruchstücke mit einer durchschnittlichen Kantenlänge im Bereich von 5 cm bis 20 cm gebrochen werden.

Weiterhin kann es bevorzugt vorgesehen werden, dass im Verfahrensschritt C) die Bruchstücke in Flocken mit einer durchschnittlichen Kantenlänge im Bereich von 1 bis 5 cm, besonders bevorzugt von 2,5 cm, Kantenlänge zerkleinert werden.

Es kann vorgesehen werden, die Bruchstücke im Verfahrensschritt C) unter Verwendung einer Schneidmühle, eines Einwellenzerkleinerers und/oder einer Hammermühle zu zerkleinern. Erfindungsgemäß kann auch eine Kombination der vorbezeichneten Vorrichtungen zur Zerkleinerung verwendet werden.

Im Verfahrensschritt D) können die Flocken unter Verwendung einer Prallstrommühle und/oder einer Kugelmühle in das Rezyklatpulver feingemahlen werden. Die Flocken können dabei mit einem Durchsatz im Bereich von 100 kg/h bis 1000 kg/h unter Verwendung der Prallstrommühle oder Kugelmühle in das Rezyklatpulver feingemahlen werden.

Insbesondere kann es vorgesehen werden, dass die Flocken unter Verwendung einer Kryogen-Kühlschnecke unter kontinuierlicher Zugabe von Stickstoff feingemahlen werden. Die Verwendung einer Kryogen-Kühlschnecke unter kontinuierlicher Zugabe von Stickstoff stellt sich als besonders vorteilhaft dar, wenn duktile Flocken feingemahlen werden sollen.

Es kann vorgesehen werden, dass die Flocken im Verfahrensschritt D) auf eine durchschnittliche Korngröße/Partikelgröße kleiner als 100 µm feingemahlen werden.

Insbesondere kann es vorgesehen werden, dass im Verfahrensschritt A) als duroplastische Ausgangswerkstoffe duroplastische Faserverbundbauteile als Sheet Molding Compound (SMC)-Teile bereitgestellt werden.

Besonders vorteilhaft kann es vorgesehen werden, dass vor dem Verfahrensschritt A) ein weiterer Verfahrensschritt A0) vorgesehen wird, wobei unausgehärtete oder unvollständig ausgehärtete Faserverbundhalbzeuge bereitgestellt werden und anschließend ein Härten der unausgehärteten Faserverbundhalbzeuge erfolgt zum Erhalt von zu rezyklierenden Faserverbundteilen als duroplastische Ausgangswerkstoffe für Verfahrensschritt A).

Es kann vorgesehen werden, dass im Verfahrensschritt A0) die unausgehärteten Faserverbundhalbzeuge flächig unter einer elektromagnetischen Strahlungsquelle positioniert werden und mit einer elektromagnetischen Strahlung im Wellenlängenbereich von 780 nm bis 1 mm beaufschlagt werden zur Aufheizung der Faserverbundhalbzeuge, bevorzugt auf eine Oberflächentemperatur im Bereich von 150 °C bis 250 °C.

Der somit ausgehärtete SMC-Werkstoff kann anschließend analog der vernetzten duroplastischen Formteile bzw. duroplastischen Ausgangswerkstoffe zerkleinert und feingemahlen werden. Der vorbezeichnete Vorgang weist den Vorteil auf, dass eine aufwändige und CO₂-intensive Entsorgung der unvernetzten duroplastischen Werkstoffe entfallen kann und die so gehärteten duroplastischen Formteile wiederum der Rezyklierung zugeführt werden können.

Alternativ kann es vorgesehen werden, dass im Verfahrensschritt A0) die unausgehärteten Faserverbundhalbzeuge in einen Temperofen eingebracht werden und im Temperofen mit einer Temperatur im Bereich von 80 °C bis 200 °C beaufschlagt werden und die Faserverbundhalbzeuge über eine Zeitdauer im Bereich von 15 bis 360 Minuten im Temperofen ausgehärtet werden.

Die somit ausgehärteten SMC-Werkstoffe können anschließend analog der vernetzt vorliegenden duroplastischen Faserverbundformteile bzw. der duroplastischen Ausgangswerkstoffe zerkleinert und feingemahlen werden, wodurch wiederum eine aufwändige, kostspielige und CO₂-intensive Entsorgung der unausgehärteten SMC-Werkstoffe vermieden werden kann und diese der Rezyklierung als Füllstoffersatz zugeführt werden können.

Gemäß einem zweiten Aspekt betrifft die vorliegende Erfindung ein Herstellungsverfahren für ein Class A-Faserverbundformteil umfassend die Verfahrensschritte gemäß dem ersten

Aspekt der vorliegenden Erfindung sowie weiterhin umfassend die Verfahrensschritte:
G) Verpressen des Halbzeuges aus Schritt F) zum Erhalt eines Faserverbundformteils;
H) Aufbringen einer In-Mould-Coating-Schicht im Pressprozess mit anschließender oder direkter Lackierung; und
I) Aushärten des Faserverbundformteils.

## Patentansprüche

1. Herstellungsverfahren für ein duroplastisches Faserverbundhalbzeug, umfassend die Verfahrensschritte:
A) Bereitstellen der Rezepturbestandteile zur Herstellung eines duroplastischen Matrixwerkstoffes für Faserverbundhalbzeuge umfassend ein Füllstoffgemisch und einen duroplastischen Reaktionsharz, wobei das Füllstoffgemisch zumindest Rezyklatpulver aus rezyklierten duroplastischen Ausgangswerkstoffen, wie insbesondere Faserverbundwerkstoffen, umfasst, in einem Gewichtsverhältnis von 1 % bis 40 % des Füllstoffgemisches;
B) Fördern der Rezepturbestandteile aus Schritt A) umfassend das Füllstoffgemisch und das Reaktionsharz mit Hilfe mindestens einer Dosiereinrichtung in einem Dissolver;
C) Vermischen der Rezepturbestandteile unter Verwendung einer Dissolverscheibe und/oder einer Doppelsogzahnscheibe im Dissolverprozess zum Erhalt eines homogenen Harz-Füllstoff-Gemisches inklusive des zugegebenen Rezyklats;
D) Aufrakeln des Harz-Füllstoff-Gemisches aus Schritt C), auf einer co-extrudierten Schleppfolie, wobei die Zugabe des Harz-Füllstoff-Gemisches auf die Schleppfolie über einen Rakelkasten erfolgt;
E) Beaufschlagen des aufgerakelten Harz-Füllstoff-Gemisches mit Schnittfasern, Fasergeweben, Fasergelegen aus Glasfaser oder alternativen Fasertypen wie Kohlenstofffasern oder Naturfasern zum Erhalt eines Faser-Harz-Füllstoff-Halbzeuges; und
F) Walken des Faser-Harz-Füllstoff-Halbzeuges zum Erhalt eines Halbzeuges, wobei die Fasern mit dem Reaktionsharz und dem Rezyklatpulver gleichmäßig umschlossen sind.

2. Herstellungsverfahren für ein duroplastisches Faserverbundhalbzeug nach Anspruch 1, wobei das Rezyklatpulver aus rezyklierten duroplastischen Ausgangswerkstoffen, wie insbesondere Faserverbundwerkstoffen, mittels eines Verfahrens gewonnen wurde, umfassend die Verfahrensschritte:
A) Bereitstellen zu rezyklierender duroplastischer Ausgangswerkstoffe;
B) Brechen der duroplastischen Ausgangswerkstoffe aus Verfahrensschritt A) mit einem Zweiwellen-Zerkleinerer zum Erhalt einer Vielzahl von Bruchstücken;
C) Zerkleinern der Bruchstücke aus Verfahrensschritt B) mit einem Einwellen-Zerkleinerer zum Erhalt einer Vielzahl von Flocken; und
D) Feinmahlen der Flocken aus Verfahrensschritt C) mit einer Mahleinrichtung zum Erhalt eines Rezyklatpulvers.

3. Herstellungsverfahren für ein duroplastisches Faserverbundhalbzeug nach Anspruch 2, wobei im Verfahrensschritt A) duroplastische Faserverbundbauteile als zu rezyklierender duroplastischer Ausgangswerkstoff bereitgestellt werden.

4. Herstellungsverfahren für ein duroplastisches Faserverbundhalbzeug nach Anspruch 2, oder 3, wobei die duroplastischen Ausgangswerkstoffe im Verfahrensschritt B) auf Bruchstücke mit einer Kantenlänge im Bereich von 5 cm bis 20 cm gebrochen werden.

5. Herstellungsverfahren für ein duroplastisches Faserverbundhalbzeug nach einem der Ansprüche 2 bis 4, wobei im Verfahrensschritt C) die Bruchstücke in Flocken mit einer Kantenlänge im Bereich von 1 cm bis 5 cm zerkleinert werden.

6. Herstellungsverfahren für ein duroplastisches Faserverbundhalbzeug nach einem der Ansprüche 2 bis 5, wobei die Bruchstücke im Verfahrensschritt C) unter Verwendung einer Schneidmühle, eines Einwellen-Zerkleinerers und/oder einer Hammermühle zerkleinert werden.

7. Herstellungsverfahren für ein duroplastisches Faserverbundhalbzeug nach einem der Ansprüche 2 bis 6, wobei im Verfahrensschritt D) die Flocken unter Verwendung einer Prallstrommühle und/oder Kugelmühle in das Rezyklatpulver feingemahlen werden.

8. Herstellungsverfahren für ein duroplastisches Faserverbundhalbzeug nach Anspruch 7, wobei die Flocken mit einem Durchsatz im Bereich von 100 kg/h - 1.000 kg/h unter Verwendung der Prallstrommühle und/oder Kugelmühle in das Rezyklatpulver feingemahlen werden.

9. Herstellungsverfahren für ein duroplastisches Faserverbundhalbzeug nach Anspruch 7 oder 8, wobei die Flocken unter Verwendung einer Kryogenkühlschnecke unter kontinuierlicher Zugabe von Stickstoff feingemahlen werden.

10. Herstellungsverfahren für ein duroplastisches Faserverbundhalbzeug nach einem der vorausgehenden Ansprüche, wobei im Verfahrensschritt D) die Flocken auf eine Korngröße im Bereich kleiner als 100 µm feingemahlen werden.

11. Herstellungsverfahren für ein duroplastisches Faserverbundhalbzeug nach einem der vorausgehenden Ansprüche, wobei im Verfahrensschritt A) als duroplastische Ausgangswerkstoffe duroplastische Faserverbundteile als Sheet Molding Compound (SMC)-Teile bereitgestellt werden.

12. Herstellungsverfahren für ein duroplastisches Faserverbundhalbzeug nach einem der vorausgehenden Ansprüche, wobei das Verfahren vor dem Verfahrensschritt A) den zusätzlichen Verfahrensschritt umfasst:
A0) Bereitstellen unausgehärteter oder unvollständig ausgehärter Faserverbundhalbzeuge und Aushärten der unausgehärteten Faserverbundhalbzeuge zum Erhalt von zu rezyklierender Faserverbundteile zur Verwendung als duroplastische Ausgangswerkstoffe für Verfahrensschritt A).

13. Herstellungsverfahren für ein duroplastisches Faserverbundhalbzeug nach Anspruch 12, wobei im Verfahrensschritt A0) die unausgehärteten Faserverbundhalbzeuge flächig unter einer elektromagnetischen Strahlungsquelle positioniert werden und mit einer elektromagnetischen Strahlung im Wellenlängenbereich von 780 nm bis 1 mm beaufschlagt werden zur Aufheizung der Faserverbundhalbzeuge, bevorzugt auf eine Oberflächentemperatur im Bereich von 150°C bis 250°C.

14. Herstellungsverfahren für ein duroplastisches Faserverbundhalbzeug nach Anspruch 12, wobei im Verfahrensschritt A0) die unausgehärteten Faserverbundhalbzeuge in einen Temperofen eingebracht und im Temperofen eine Temperatur im Bereich von 80°C bis 200°C erzeugt wird und die Faserverbundhalbzeuge über eine Zeitdauer von 15 - 360 Minuten im Temperofen ausgehärtet werden.

15. Herstellungsverfahren für ein Class A-Faserverbundformteil umfassend die Verfahrensschritte nach einem der Ansprüche 1 bis 14 und weiterhin umfassend:
G) Verpressen des Halbzeuges aus Schritt F) zum Erhalt eines Faserverbundformteils;
H) Aufbringen einer In-Mould-Coating Schicht im Pressprozess mit anschließender Lackierung; und
I) Aushärten des Faserverbundformteils.

## Claims

1. A manufacturing method for a thermosetting fiber composite semi-finished product, comprising the following method steps:
A) providing the formulation ingredients for manufacturing a thermosetting matrix material for fiber composite semi-finished products comprising a filler mixture and a thermosetting reactive resin, wherein the filler mixture comprises at least recycled powder from recycled thermosetting starting materials, such as in particular fiber composite materials, in a weight ratio of 1% to 40% of the filler weight;
B) conveying the formulation ingredients of step A) comprising the filler mixture and the reactive resin into a dissolver with the aid of at least one metering device;
C) mixing the formulation ingredients using a dissolver disk and/or a double suction toothed disk in the dissolver process to obtain a homogeneous resin-filler mixture including the added recyclate;
D) doctor blade coating of the resin-filler mixture of step C) onto a co-extruded drag film, wherein the resin-filler mixture is added to the drag film via a doctor blade box;
E) applying chopped fibers, fiber fabrics, non-crimp fabrics made of glass fiber or alternative fiber types such as carbon fibers or natural fibers to the resin-filler mixture coated with a doctor blade to obtain a fiber-resin-filler semi-finished product; and
F) fulling the fiber-resin-filler semi-finished product to obtain a semi-finished product, wherein the fibers are uniformly enclosed with the reactive resin and the recyclate powder.

2. The manufacturing method for a thermosetting fiber composite semi-finished product according to claim 1, wherein the recyclate powder was obtained from recycled thermosetting starting materials, such as in particular fiber composites, by means of a method comprising the following method steps:
A) providing thermosetting starting materials to be recycled;
B) breaking the thermosetting starting materials of method step A) with a twin-shaft shredder to obtain a plurality of fragments;
C) shredding the fragments of method step B) with a single-shaft shredder to obtain a plurality of flakes; and
D) fine grinding of the flakes of method step C) with a grinding device to obtain a recyclate powder.

3. The manufacturing method for a thermosetting fiber composite semi-finished product according to claim 2, wherein thermosetting fiber composite components are provided as a thermosetting starting material to be recycled in method step A).

4. The manufacturing method for a thermosetting fiber composite semi-finished product according to claim 2 or 3, wherein in method step B), the thermosetting starting materials are broken to fragments having an edge length in the range from 5 cm to 20 cm.

5. The manufacturing method for a thermosetting fiber composite semi-finished product according to any one of claims 2 to 4, wherein in method step C), the fragments are shredded into flakes having an edge length in the range from 1 cm to 5 cm.

6. The manufacturing method for a thermosetting fiber composite semi-finished product according to one of claims 2 to 5, wherein the fragments are shredded in method step C) using a cutting mill, a single-shaft shredder and/or a hammer mill.

7. The manufacturing method for a thermosetting fiber composite semi-finished product according to one of claims 2 to 6, wherein in method step D), the flakes are finely ground into the recyclate powder using an impact jet mill and/or a ball mill.

8. The manufacturing method for a thermosetting fiber composite semi-finished product according to claim 7, wherein the flakes are finely ground into the recyclate powder at a throughput in the range of 100 kg/h to 1,000 kg/h using the impact jet mill and/or the ball mill.

9. The manufacturing method for a thermosetting fiber composite semi-finished product according to claim 7 or 8, wherein the flakes are finely ground using a cryogenic cooling screw with continuous addition of nitrogen.

10. The manufacturing method for a thermosetting fiber composite semi-finished product according to one of the preceding claims, wherein in method step D), the flakes are finely ground to a grain size in the range of less than 100 µm.

11. The manufacturing method for a thermosetting fiber composite semi-finished product according to one of the preceding claims, wherein in method step A), thermosetting fiber composite parts as sheet molding compound (SMC) parts are provided as thermosetting starting materials.

12. The manufacturing method for a thermosetting fiber composite semi-finished product according to one of the preceding claims, wherein the method before method step A) comprises the following additional method step:
AQ) providing uncured or incompletely cured fiber composite semi-finished products and curing the uncured fiber composite semi-finished products to obtain fiber composite parts to be recycled for use as thermosetting starting materials for method step A).

13. The manufacturing method for a thermosetting fiber composite semi-finished product according to claim 12, wherein in method step A0), the uncured fiber composite semi-finished products are positioned flat under an electromagnetic radiation source and exposed to electromagnetic radiation in the wavelength range from 780 nm to 1 mm to heat the fiber composite semi-finished products, preferably to a surface temperature in the range from 150°C to 250°C.

14. The manufacturing method for a thermosetting fiber composite semi-finished product according to claim 12, wherein in method step A0), the uncured fiber composite semi-finished products are introduced into a tempering furnace, and a temperature in the range from 80°C to 200°C is generated in the tempering furnace, and the fiber composite semi-finished products are cured in the tempering furnace for a period of 15-360 minutes.

15. A manufacturing method for a Class A fiber composite molded part comprising the method steps according to one of claims 1 to 14 and further comprising:
G) pressing the semi-finished product of step F) to obtain a fiber composite molded part;
H) applying an in-mold coating layer in the pressing process with subsequent painting; and
I) curing the fiber composite molded part.

## Revendications

1. Procédé de fabrication d'un produit semi-fini composite à fibres thermodurcissable, comprenant les étapes de procédé:
A) fourniture des composants de formulation pour la fabrication d'un matériau de matrice thermodurcissable pour produits semi-finis composites à fibres comprenant un mélange de charges et une résine réactive thermodurcissable, dans lequel le mélange de charges comprend au moins une poudre de matériau recyclé provenant de matériaux de départ thermodurcissables recyclés, comme, notamment, des matériaux composites à fibres, dans une proportion pondérale de 1 % à 40 % du mélange de charges;
B) transfert des composants de formulation de l'étape A) comprenant le mélange de charges et la résine réactive à l'aide d'au moins un dispositif doseur dans un dissolveur;
C) mélange des composants de formulation à l'aide d'un disque de dissolution et/ou d'un disque à double aspiration dans le processus à dissolveur pour obtenir un mélange résine-charge homogène, incluant le matériau recyclé ajouté;
D) application à la racle du mélange résine-charge de l'étape C) sur un film support coextrudé, dans lequel l'addition du mélange résine-charge a lieu sur le film support à l'aide d'une racle;
E) addition de fibres coupées, de tissus de fibres, de nattes de fibres en fibres de verre ou d'autres types de fibres comme les fibres de carbone ou les fibres naturelles au mélange résine-charge appliqué à la racle pour obtenir un produit semi-fini fibre-résine-charge;
F) moulage du produit semi-fini fibre-résine-charge pour obtenir un produit semi-fini dans lequel les fibres sont uniformément entourées par la résine réactive et la poudre de matériau recyclé.

2. Procédé de fabrication d'un produit semi-fini composite à fibres thermodurcissable selon la revendication 1, dans lequel la poudre de matériau recyclé a été obtenue à partir de matériaux de départ thermodurcissables recyclés, comme notamment des matériaux composites à fibres, par un procédé comprenant les étapes de procédé:
A) fourniture de matériaux de départ thermodurcissables à recycler;
B) fractionnement des matériaux de départ thermodurcissables issus de l'étape A) avec un concasseur à double arbre pour obtenir une multiplicité de fragments;
C) broyage des fragments issus de l'étape B) avec un concasseur à arbre unique pour obtenir une multiplicité de paillettes; et
D) broyage fin des paillettes issues de l'étape C) avec un broyeur pour obtenir une poudre de matériau recyclé.

3. Procédé de fabrication d'un produit semi-fini composite à fibres thermodurcissable selon la revendication 2, dans lequel, à l'étape de procédé A), des composants composites à fibres thermodurcissables sont fournis comme matériau de départ thermodurcissable à recycler.

4. Procédé de fabrication d'un produit semi-fini composite à fibres thermodurcissable selon la revendication 2 ou 3, dans lequel, à l'étape de procédé B, les matériaux de départ thermodurcissables sont fractionnés en fragments dont la longueur d'arête est dans le domaine de 5 à 20 cm.

5. Procédé de fabrication d'un produit semi-fini composite à fibres thermodurcissable selon l'une des revendications 2 à 4, dans lequel, à l'étape de procédé C), les fragments sont réduits en paillettes dont la longueur d'arête est dans le domaine de 1 à 5 cm.

6. Procédé de fabrication d'un produit semi-fini composite à fibres thermodurcissable selon l'une des revendications 2 à 5, dans lequel, à l'étape de procédé C), les fragments sont broyés à l'aide d'un broyeur à couteaux, d'un broyeur à arbre unique et/ou d'un broyeur à marteaux.

7. Procédé de fabrication d'un produit semi-fini composite à fibres thermodurcissable selon l'une des revendications 2 à 6, dans lequel, à l'étape de procédé D), les paillettes sont finement broyées en la poudre de matériau recyclé à l'aide d'un broyeur à impact et/ou d'un broyeur à boulets.

8. Procédé de fabrication d'un produit semi-fini composite à fibres thermodurcissable selon la revendication 7, dans lequel les paillettes sont finement broyées en la poudre de matériau recyclé à l'aide du broyeur à impact et/ou du broyeur à boulets à un débit dans le domaine de 100 kg/h à 1 000 kg/h.

9. Procédé de fabrication d'un produit semi-fini composite à fibres thermodurcissable selon la revendication 7 ou 8, dans lequel les paillettes sont finement broyées à l'aide d'un broyeur à vis cryogénique avec ajout continu d'azote.

10. Procédé de fabrication d'un produit semi-fini composite à fibres thermodurcissable selon l'une des revendications précédentes, dans lequel, à l'étape de procédé D), les paillettes sont finement broyées jusqu'à une granulométrie dans le domaine inférieur à 100 µm.

11. Procédé de fabrication d'un produit semi-fini composite à fibres thermodurcissable selon l'une des revendications précédentes, dans lequel, à l'étape de procédé A), comme matériaux de départ thermodurcissables des pièces composites à fibres thermodurcissables sont fournies sous forme de pièces en Sheet Molding Compound (SMC).

12. Procédé de fabrication d'un produit semi-fini composite à fibres thermodurcissable selon l'une des revendications précédentes, dans lequel le procédé comprend avant l'étape de procédé A) l'étape de procédé supplémentaire:
A0) fourniture de produits semi-finis composites à fibres non durcis ou incomplètement durcis et durcissement des produits semi-finis composites à fibres non durcis pour obtenir des pièces composites à fibres à recycler destinées à être utilisées comme matériaux de départ thermodurcissables pour l'étape de procédé A).

13. Procédé de fabrication d'un produit semi-fini composite à fibres thermodurcissable selon la revendication 12, dans lequel, à l'étape de procédé A0), les produits semi-finis composites à fibres non durcis sont positionnés sur une surface plane sous une source de rayonnement électromagnétique et exposés à un rayonnement électromagnétique dans le domaine de longueur d'onde de 780 nm à 1 mm pour chauffer les produits semi-finis composites à fibres, de préférence à une température de surface dans le domaine de 150°C à 250°C.

14. Procédé de fabrication d'un produit semi-fini composite à fibres thermodurcissable selon la revendication 12, dans lequel, à l'étape A0), les produits semi-finis composites à fibres non durcis sont placés dans un four de trempe et dans le four de trempe une température dans le domaine de 80°C à 200°C est générée, et les produits semi-finis composites à fibres sont durcis dans le four de trempe pendant une durée de 15 à 360 minutes.

15. Procédé de fabrication d'une pièce moulée composite à fibres de classe A comprenant les étapes de procédé selon l'une des revendications 1 à 14 et comprenant en outre:
G) le pressage du produit semi-fini issu de l'étape F) pour obtenir une pièce moulée composite à fibres;
H) l'application d'une couche de revêtement dans le moule dans le processus de pressage, suivie d'une peinture; et
I) le durcissement de la pièce moulée composite à fibres.
